# FASCICULE DE BREVET EUROPEEN

(11) **EP 3 404 681 B1**
(45) Date de publication et mention de la délivrance du brevet: **02.12.2020**
(21) Numéro de dépôt: 18172911.2
(22) Date de dépôt: 17.05.2018
(51) Int. Cl.: H01H 9/34, H01H 9/36, H01H 50/04, H01H 50/54

(54) **ELÉMENT AMOVIBLE DE COUPURE D'UN COURANT ÉLECTRIQUE ET APPAREIL ÉLECTRIQUE DE COUPURE D'UN COURANT ÉLECTRIQUE COMPRENANT UN TEL ÉLÉMENT AMOVIBLE DE COUPURE**
ENTFERNBARES UNTERBRECHUNGSELEMENT FÜR ELEKTRISCHEN STROM, UND ELEKTRISCHES UNTERBRECHUNGSGERÄT EINES ELEKTRISCHEN STROMS, DAS EIN SOLCHES ENTFERNBARES ELEMENT UMFASST
REMOVABLE ELEMENT FOR INTERRUPTING AN ELECTRICAL CURRENT AND ELECTRICAL INTERRUPTER OF AN ELECTRICAL CURRENT COMPRISING SUCH A REMOVABLE INTERRUPTING ELEMENT

(30) Priorité: 17.05.2017 FR 1754351
(43) Date de publication de la demande: 21.11.2018
(73) Titulaire: Schneider Electric Industries SAS, 92500 Rueil-Malmaison (FR)
(72) Inventeur: LARCHER, Patrick, 38050 GRENOBLE Cedex 09 (FR); COMTOIS, Patrick, 38050 GRENOBLE Cedex 09 (FR)
(74) Mandataire: Lavoix

(56) Documents cités:
- EP-A1- 2 019 405
- EP-A1- 2 648 204
- EP-A1- 2 936 529
- US-A1- 2011 114 602

## Description

L'invention concerne un élément amovible de coupure électrique pour un appareil électrique de coupure. L'invention concerne également un appareil électrique de coupure de courant électrique comprenant un tel élément amovible de coupure.

On connaît des appareils électriques pour couper un courant électrique, tels que des contacteurs, qui comportent un ou plusieurs éléments amovibles de coupure insérés dans des logements d'une embase de l'appareil. Ces éléments amovibles sont parfois connus sous le nom d'ampoule de coupure. Un tel élément amovible est, par exemple, décrit dans FR 2 999 790 ou dans EP 2 936 529 A1.

Généralement, chaque élément amovible est connecté à des plages de connexion de l'appareil électrique et a pour rôle d'interrompre sélectivement la circulation d'un courant électrique entre ces plages. Pour ce faire, chaque élément amovible comporte des conducteurs électriques séparables dont le déplacement est commandé par un actionneur dédié entre une position ouverte et une position fermée par rapport aux contacts électriques fixes pour interrompre ou, respectivement, autoriser le passage du courant électrique.

De tels éléments amovibles ont pour avantage d'être interchangeables et donc d'être faciles à remplacer lors d'opérations de maintenance ou en cas de dysfonctionnements.

Toutefois, ces éléments amovibles connus ne donnent pas entière satisfaction. En particulier, lorsque les contacts électriques sont séparés alors qu'un courant électrique circule, il apparaît un arc électrique entre ces contacts. L'arc électrique ionise l'air ambiant et génère des gaz de coupure, qui doivent être refroidis et évacués hors de l'élément de coupure, par l'intermédiaire de canaux d'évacuation spécialement ménagés à cet effet. Certains éléments amovibles connus présentent à cet égard une étanchéité qui n'est pas suffisante, ce qui peut engendrer des fuites de gaz de coupure insuffisamment refroidi et qui favorise des réamorçages non souhaités entre les plages de connexion. La sécurité de l'appareil de coupure s'en trouve alors amoindrie.

C'est à ces inconvénients qu'entend plus particulièrement remédier l'invention, en proposant un élément amovible de coupure d'un courant électrique pour un appareil électrique de coupure, cet élément amovible présentant une étanchéité améliorée vis-à-vis des gaz de coupure.

A cet effet, l'invention concerne élément amovible de coupure d'un courant électrique, comprenant :
- un boîtier comprenant une première plaque de fond et une deuxième plaque de fond opposées entre elles ;
- des contacts électriques fixes, solidaires de la première plaque de fond ;
- des contacts électriques mobiles déplaçables par rapport aux contacts électriques fixes, ces contacts mobiles étant portés par un porte-contact mobile déplaçable en translation par rapport à la deuxième plaque de fond
le boîtier comprenant :
- des parois d'isolement qui s'étendent autour des contacts électriquement mobiles depuis la deuxième plaque de fond et selon une direction perpendiculaire à la deuxième plaque de fond, et
- des parois de protection qui recouvrent au moins partiellement des faces intérieures des parois d'isolement, ces parois de protection étant formées d'un seul tenant avec la deuxième plaque de fond.

Le boîtier comporte une première partie et deuxième partie distinctes l'une de l'autre, la première partie de boîtier comprenant la première plaque de fond, la deuxième partie de boîtier comportant la deuxième plaque de fond et recevant le pont mobile, les première et deuxième parties de boîtier étant séparables l'une de l'autre.

Les première et deuxième parties de boîtier sont séparables et comportent des organes de fixation complémentaires pour solidariser les première et deuxième parties de boîtier l'une avec l'autre.

Grâce à l'invention, en formant les parois de protection d'un seul tenant avec la deuxième plaque de fond, on améliore l'étanchéité de ces parois ainsi que l'étanchéité des parois d'isolement. Les fuites de gaz de coupure sont donc limitées. Grâce à cette bonne étanchéité, les gaz de coupure sont préférentiellement évacués par le biais des canaux d'évacuation, et on réduit ainsi le risque de rebouclage d'un courant électrique à l'extérieur de l'élément amovible.

Selon des aspects avantageux mais non obligatoires de l'invention, un tel élément amovible peut incorporer une ou plusieurs des caractéristiques suivantes, prises isolément ou suivant toute combinaison techniquement admissible :
- Les parois de protection comportent des bords repliés qui entourent les d'extrémité des parois d'isolement selon la direction perpendiculaire à la deuxième plaque de fond.
- La deuxième partie de boîtier comporte une portion de guidage qui autorise le déplacement en translation du porte-contact mobile, la portion de guidage comportant à cet effet une fenêtre rectiligne et ménagée dans une paroi latérale de la première partie de boîtier et comportant au moins un crochet porté par le pont mobile, ce crochet étant inséré dans la fenêtre.
- Les parois de protection sont réalisées dans un matériau gazogène.
- La deuxième plaque de fond contient au moins un canal d'évacuation des gaz de coupure, qui raccorde fluidiquement un orifice d'entrée, débouchant dans un volume délimité par les parois d'isolement à l'intérieur du boîtier, à un orifice de sortie, débouchant à l'extérieur du boîtier.
- Les parois de protection s'étendent sur toute la hauteur des parois d'isolement, selon la direction perpendiculaire à la deuxième plaque de fond.
- Les parois d'isolement sont au moins en partie formées par une pièce de soufflage rapporté sur la deuxième plaque de fond.

Selon un autre aspect, l'invention concerne un appareil électrique de coupure d'un courant électrique comprenant une embase comportant un ou plusieurs logements et un élément amovible de coupure d'un courant électrique, destiné à être reçu dans un des logements de l'embase, de sorte à ce que les contacts électriques fixes de l'élément amovible de coupure soient raccordés électriquement à des plages de connexion de l'appareil de coupure, l'élément amovible de coupure étant tel que décrit précédemment.

L'invention sera mieux comprise et d'autres avantages de celle-ci apparaitront plus clairement à la lumière de la description qui va suivre, d'un mode de réalisation d'un élément amovible de coupure donnée uniquement à titre d'exemple et faite en référence aux dessins annexés, dans lesquels :
- la figure 1 est une représentation schématique, selon une vue en perspective, d'un appareil électrique de coupure comportant un élément amovible de coupure conforme à l'invention ;
- la figure 2 est une représentation schématique, dans une vue en coupe longitudinale, de première et deuxième parties de l'élément amovible de coupure de la figure 1 séparées l'une de l'autre ;
- la figure 3 est une représentation schématique, selon une vue éclatée et en perspective, de l'élément électrique de coupure des figures 1 et 2 ;
- la figure 4 est une représentation schématique, selon une vue éclatée et en perspective, d'une deuxième partie de l'élément amovible de coupure des figures 1 à 3 ;
- la figure 5 est une représentation schématique, selon une vue de face, de la deuxième partie de boîtier de l'élément amovible de coupure de la figure 4.

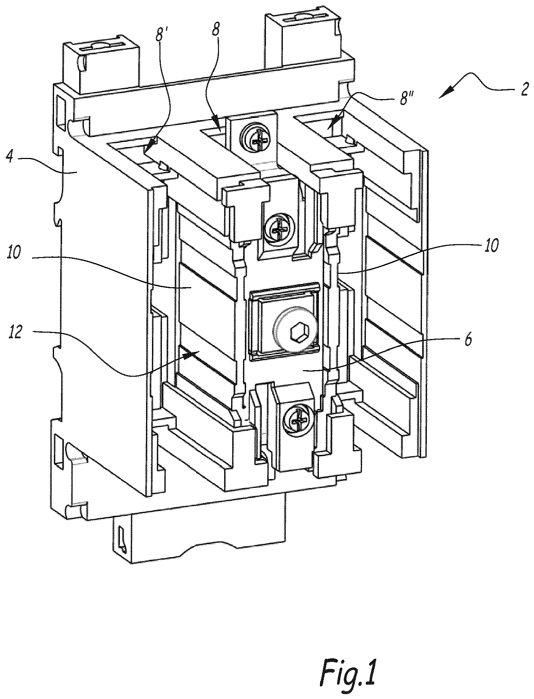

La figure 1 représente un appareil électrique 2 de coupure d'un courant électrique, tel qu'un contacteur industriel. L'appareil électrique 2 est par exemple destiné à être connecté à une ligne électrique d'alimentation d'un moteur électrique.

L'appareil électrique 2 a pour fonction d'interrompre sélectivement un courant électrique circulant au travers d'une ou de plusieurs conducteurs de courant, par exemple un courant électrique alternatif polyphasé.

L'appareil électrique 2 comporte ici une embase 4, par exemple destinée à être installée dans un tableau électrique, et un ou plusieurs éléments amovibles 6 de coupure d'un courant électrique, ici nommés « ampoules de coupure ». Chaque élément amovible 6 est adapté pour interrompre un courant électrique, par exemple une phase électrique d'un courant polyphasé.

L'appareil électrique 2 comporte également un actionneur commandable, non illustré, destiné à être reçu sur une face avant de l'embase 4 pour commander les éléments amovibles 6.

Dans cet exemple illustratif, l'appareil électrique 2 est adapté pour interrompre un courant triphasé comportant trois phases électriques, et est donc adapté pour accueillir trois éléments amovibles 6, chacun associé à une de ces phases électriques.

L'embase 4 comporte ici des logements 8, 8' et 8", au nombre de trois et identiques entre eux, chacun adapté pour recevoir un élément amovible 6. Les logements 8, 8' et 8" sont à cet effet de forme complémentaire à celle des éléments amovibles 6.

Les logements 8, 8' et 8" sont ici séparés deux à deux par des parois de séparation 10 qui sont de préférence réalisées en un matériau électriquement isolant, tel qu'une matière plastique. Les parois de séparation 10 comportent ici des rainures 12 pour guider l'insertion de l'élément amovible 6.

En variante, le nombre d'éléments amovibles 6 peut être différent. L'embase 4 est alors adaptée en conséquence.

Pour simplifier la figure 1, un seul exemplaire de l'élément amovible 6 est illustré. Dans cet exemple, les éléments amovibles 6 sont identiques entre eux. L'élément amovible 6 est illustré reçu à l'intérieur du logement 8.

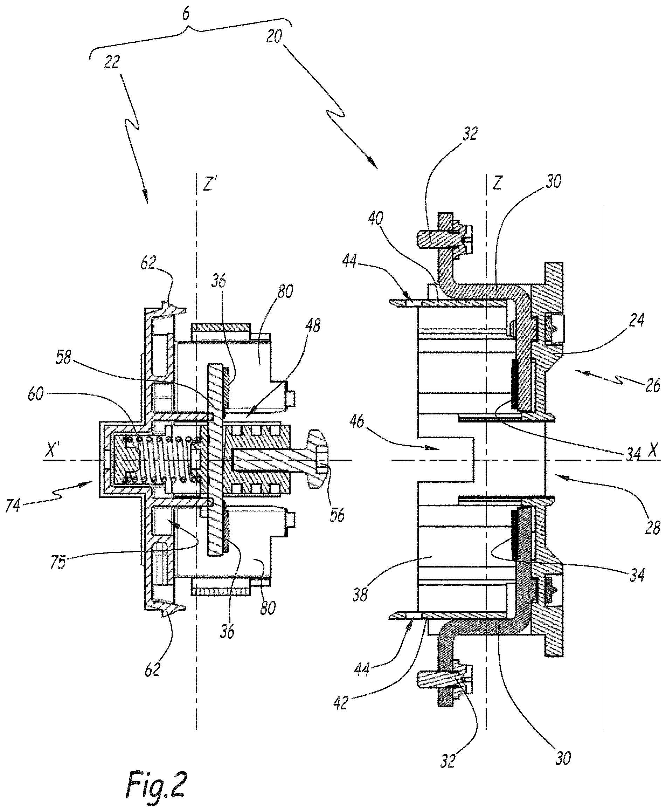

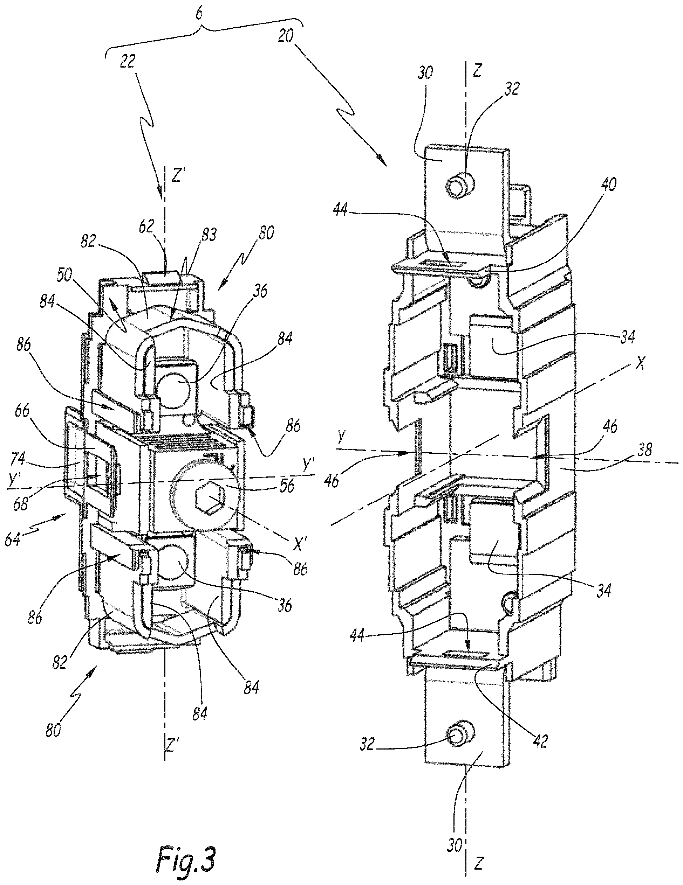

Comme illustré aux figures 2 et 3, l'élément amovible 6 comporte un boîtier formé d'une première partie 20 et d'une deuxième partie 22. Ces première et deuxième parties 20, 22 sont ici distinctes et séparables l'une de l'autre, comme expliqué plus en détail dans ce qui suit.

La première partie 20, aussi dite partie avant, comporte une première plaque de fond 24, qui forme une face avant 26 essentiellement plane de l'élément amovible 6. La face avant 26 est pourvue d'une fenêtre traversante 28.

La partie avant 20 comporte en outre des terminaux de raccordement 30, fixés sur la plaque de fond 24 et qui sont destinés à être raccordés à des plages de connexion électrique de l'appareil 2, de manière à connecter l'élément amovible 6 à un circuit électrique. Ces terminaux 30 sont ici au nombre de deux et sont isolés électriquement l'un de l'autre.

Par exemple, les terminaux 30 s'étendent depuis l'intérieur de la partie avant 20, vers l'extérieur de celle-ci, et sont maintenus fixés aux plages de connexion au moyen de vis de maintien 32. Ces terminaux 30 comportent des contacts électriques fixes 34, qui sont destinés à coopérer avec des contacts électriques mobiles 36 de l'élément amovible 6. Ces contacts fixes 34 sont ici reçus à l'intérieur de la partie avant 20.

Dans cet exemple, la partie avant 20 présente une forme oblongue s'étendant suivant un axe longitudinal Z. L'axe Z correspond ici à une direction verticale lorsque l'élément amovible 6 est reçu à l'intérieur de l'embase 4. Par exemple, les deux terminaux 30 s'étendent parallèlement à cet axe Z.

On note « X » un axe perpendiculaire à la face avant 26 et à l'axe longitudinal Z de la partie avant 20. On note « Y » un axe transversal de la partie avant 20, cet axe transversal Y étant perpendiculaire aux axes X et Z.

La partie avant 20 comporte ici des parois latérales 38 qui s'étendent parallèlement de part et d'autre d'un plan médian longitudinal de la partie avant 20, perpendiculairement à l'axe Y. Les parois latérales 38 sont ici pourvues d'évidements latéraux 46.

En outre, la partie avant 20 comporte des parois supérieure 40 et inférieure 42, qui s'étendent parallèlement à un plan médian transversal parallèle aux axes X et Y. Ces parois 40 et 42 portent ici des organes de fixation 44, dont le rôle est décrit plus en détail dans ce qui suit.

On note « 48 » le volume intérieur délimité par les parois 38, 40 et 42 de la partie avant 20.

Comme illustré aux figures 2 à 5, la partie arrière 22 du boîtier comporte une deuxième plaque de fond 50, qui forme ici une face arrière 52 essentiellement plane de l'élément amovible 6.

Dans une configuration assemblée de l'élément amovible 6, la partie arrière 22 est reçue à l'intérieur du volume 48 de la partie avant 20. Les plaques de fond 24 et 50 sont alors opposées et se font face l'une avec l'autre.

Dans ce mode de réalisation, les parties avant 20 et arrière 22 sont séparables l'une de l'autre de façon réversible, de préférence lorsque l'élément amovible 6 se trouve en dehors de l'embase 4. Cela permet notamment à un opérateur d'examiner les contacts électriques 34, 36 afin d'évaluer leur usure, par exemple lors d'opérations de maintenance préventive.

En variante, toutefois, les parties 20 et 22 peuvent être soudées l'une à l'autre de façon permanente.

La partie arrière 22 présente une forme oblongue qui s'étend selon un axe longitudinal Z'. A la figure 3, on note « X' » un axe perpendiculaire à l'axe « Z' » et à la face arrière 52. On note en outre « Y' » un axe transversal qui s'étend perpendiculairement aux axes X' et Z'.

Dans la configuration assemblée de l'élément amovible 6, les axes Z et Z' sont confondus entre eux. Il en va de même pour les axes X et X' ainsi que pour les axes Y et Y'.

La partie arrière 22 comporte les contacts mobiles 36. Ces contacts mobiles 36 sont ici au nombre de deux et sont connectés électriquement l'un avec l'autre.

Dans la configuration assemblée de l'élément amovible 6, les contacts mobiles 36 sont disposés en regard des contacts fixes 34 correspondants. Les contacts mobiles 36 sont sélectivement et réversiblement déplaçables par rapport aux contacts fixes 34, entre une position ouverte et une position fermée, distinctes l'une de l'autre. Ce déplacement est ici réalisé en translation selon une direction de déplacement parallèle à l'axe X'.

Dans la position ouverte, les contacts électriques 34 et 36 sont éloignés l'un de l'autre et sont ainsi isolés électriquement l'un de l'autre par l'air ambiant. Dans la position fermée, chacun des contacts 34 est en contact avec un contact mobile 36 correspondant, autorisant le passage d'un courant électrique entre les deux terminaux 30.

Pour assurer ce déplacement, dans cet exemple, la partie arrière 22 comporte un porte-contact mobile 54 qui est déplaçable en translation selon l'axe X' par rapport à la plaque de fond 50. Ce porte-contact mobile 54 comporte un organe de préhension 56 ainsi qu'un élément 58 électriquement conducteur, communément nommé point mobile, ici en forme de plaquette, qui raccorde les contacts mobiles 36 l'un avec l'autre.

L'organe de préhension 56 est destiné à être couplé mécaniquement avec l'actionneur de l'appareil de coupure 2, pour entraîner le déplacement des contacts mobiles 36 entre les positions ouverte et fermée. Dans la configuration assemblée de l'élément amovible 6, la fenêtre 28 permet le passage de l'organe de préhension 56.

Par exemple, le porte-contact mobile 54 comporte un corps en matière électriquement isolante qui est solidaire de l'élément 58 et sur lequel est monté l'organe de préhension 56. L'organe de préhension 56 est ici une tête de vis.

Le porte-contact mobile 54 comporte également un organe de rappel élastique 60, tel qu'un ressort hélicoïdal, agencé pour exercer une force de rappel sur le pont mobile 58, selon la direction de déplacement X', de manière à ramener les contacts mobiles 36 vers la position ouverte lorsqu'aucune force n'est exercée par l'actionneur de l'appareil 2.

A titre d'exemple illustratif, les contacts mobiles 36 sont ici disposés de part et d'autre du pont mobile 58 selon l'axe Z', ce pont mobile 58 occupant une position centrale au sein de la partie arrière 22.

Dans ce mode de réalisation, la partie arrière 22 comporte également des organes de fixation 62, qui sont destinés à coopérer avec les organes de fixation 44 portés par la partie avant 20. Ces organes de fixation 44, 62 permettent de solidariser ensemble les parties 20 et 22 de façon réversible.

Ainsi, les parties 20 et 22 sont facilement séparables l'une de l'autre par un opérateur, par exemple pour contrôler visuellement l'intérieur de l'élément amovible 6, puis peuvent être tout aussi facilement réassemblées l'une avec l'autre. Cela facilite la maintenance de l'élément amovible 6 et de l'appareil électrique 2.

Par exemple, les organes 44 et 62 assurent une fixation par encliquetage. L'organe 44 est ici un organe femelle, tel qu'un orifice, alors que l'organe 62 est un organe mâle, tel qu'un crochet déformable, ici formé d'un seul tenant avec la plaque de fond 50. En variante, les organes 44 et 62 sont respectivement des organes mâle et femelle.

Dans cet exemple, la partie arrière 22 comporte également une portion de guidage 64 qui autorise le déplacement en translation du pont mobile 54 la direction de déplacement X'.

La portion de guidage 64 est ici formée au niveau de parois latérales 66 de la partie arrière 22. Les parois latérales 66 s'étendent ici de part et d'autre du porte-contact mobile 54 selon des directions parallèles aux axes X' et Z'.

Dans la configuration assemblée, les parois latérales 66 sont reçues dans les évidements latéraux 46. On comprend donc que la forme des parois latérales 66 et des évidements latéraux 46 sont choisies de façon à être complémentaires.

Les parois latérales 66 sont ici de forme plane et comportent une ouverture oblongue 68, ou fenêtre 68, s'étendant selon l'axe X' et formant un rail de guidage. L'ouverture 68 est délimitée par des bords 70 qui forment une butée limitant le déplacement du porte-contact mobile 54 selon l'axe X' avec une course prédéfinie.

De façon complémentaire, le porte-contact mobile 54 comporte des crochets 72 qui sont reçus à l'intérieur de l'ouverture 68. Ces crochets 72 comportent par exemple un bord incliné 73 destiné à faciliter leur insertion dans l'ouverture 68.

La plaque de fond 50 comporte également un canal 74 d'évacuation des gaz de coupure. Le canal 74 a pour fonction de permettre le refroidissement de gaz de coupure et d'assurer son échappement vers l'extérieur de l'élément amovible 6.

De façon connue, lors de la séparation des contacts électriques 34 et 36 en présence d'un courant électrique, il apparaît un arc électrique qui ionise l'air ambiant, donnant naissance à un gaz de coupure. Ce gaz de coupure présente une température élevée et doit, de préférence, être refroidi avant son rejet à l'extérieur de l'ensemble 6. En effet, ce gaz de coupure est électriquement conducteur lorsqu'il est chaud. S'il est rejeté hors de l'élément amovible 6 sans être suffisamment refroidi, il peut faire courir un risque de rebouclage du courant électrique, c'est-à-dire un court-circuit, entre les plages de connexion de l'appareil 2, ce qui est dangereux et n'est évidemment pas souhaitable.

Ainsi, la deuxième plaque de fond 50 contient avantageusement au moins un canal 74 d'évacuation des gaz de coupure, qui raccorde fluidiquement un orifice d'entrée, débouchant à l'intérieur de la partie avant 20, à un orifice de sortie, débouchant à l'extérieur du boîtier. L'intérieur de la partie avant 20 correspond ici à la face de la plaque de fond 50 qui est tournée à l'opposé de la face arrière 52, i.e. qui est tournée vers la partie avant 20 lorsque l'ensemble 6 est dans la configuration assemblée.

Ce canal d'évacuation 74 peut comporter un chicanage, non illustré, destiné à allonger la trajectoire du gaz de coupure de façon à favoriser son refroidissement.

Par exemple, le canal 74 débouche sur une face extérieure de la plaque de fond 50. La plaque de fond 50 comporte un ou plusieurs d'orifice d'entrée de ce canal 74, comme expliqué dans ce qui suit.

La partie arrière 22 comporte également des parois d'isolement 80. Ces parois 80 s'étendent depuis la plaque de fond 50, ici selon la direction X'. Ces parois d'isolement 80 entourent au moins partiellement les contacts électriques 36. Dans cet exemple, les parois d'isolement 80 sont au nombre de deux, chacune entourant un des contacts mobiles 36. Les parois d'isolement 80 sont ici disposées de part et d'autre du pont mobile 54. Dans cet exemple, les parois 80 sont identiques et sont disposés de façon symétrique par rapport au pont mobile 54.

Chaque paroi d'isolement 80 délimite un volume formant une chambre de coupure autour du contact mobile 36 correspondant. De préférence, la hauteur des parois d'isolement 80, mesurée parallèlement à l'axe X', est supérieure ou égale à la course du pont mobile 54 selon l'axe X'.

Le canal d'évacuation 74 comporte ici un orifice d'entrée dans chacune de ces chambres de coupure. En variante, la plaque de fond 50 peut également comporter plusieurs canaux 74 possédant chacun un orifice d'entrée associé à une seule des chambres de coupure.

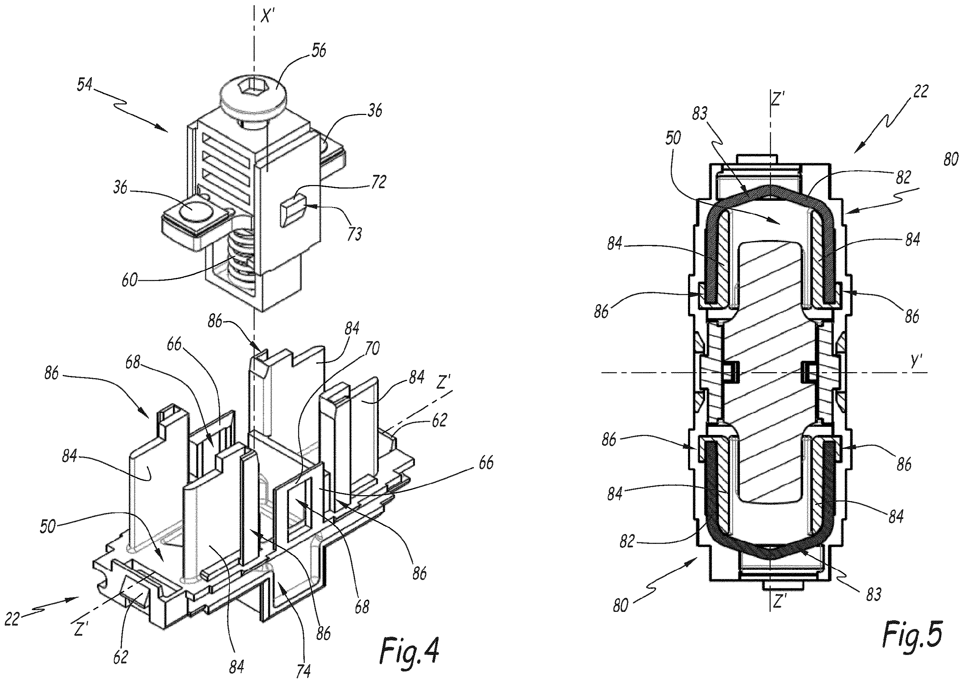

Comme illustré aux figures 4 et 5, les parois d'isolement 80 sont ici chacune au moins en partie formées par une pièce 82, dite « pièce de soufflage », rapportée sur la plaque de fond 50. Dans cet exemple, les parois de fond 80 sont entièrement formées par la pièce 82, de sorte que ce qui est décrit en référence à ces parois d'isolement 80 se rapporte également à la pièce 82.

La pièce de soufflage 82 est réalisée en un matériau magnétique, par exemple un métal ferromagnétique, et a pour fonction de favoriser le soufflage, c'est-à-dire l'extinction, d'un arc électrique qui se forme au niveau du contact mobile 36 correspondant. La pièce 82 exerce un champ magnétique qui guide l'arc électrique vers une zone particulière de la chambre de coupure.

Chaque pièce de soufflage 82 présente ici une forme en U. Plus précisément, la base de cette pièce 82 présente ici une forme en U, la pièce 82 s'étendant par translation depuis cette base parallèlement à l'axe X'. La pièce 82 comporte deux cloisons latérales identiques opposées qui sont placées de part et d'autre du contact mobile 36 correspondant, en s'étendant perpendiculairement à l'axe Y' et parallèlement aux axes X' et Z' et donc perpendiculairement à la plaque de fond 50. Ces cloisons latérales sont reliées entre elles par une cloison recourbée s'élevant parallèlement à l'axe X' et qui forme un fond 83 de la forme en U de la pièce 82. Les cloisons latérales comportent également des bords d'extrémité, situés à l'opposé de la cloison recourbée et s'étendant parallèlement à l'axe X'. Dans ce qui suit, les « bords d'extrémité » des cloisons latérales de la pièce 82 correspondent aux bords d'extrémité de la paroi d'isolement 80 correspondante.

Le boîtier de l'élément amovible 6 comporte également des parois de protection 84, qui recouvrent au moins partiellement les faces intérieures des parois d'isolement 80, ici au niveau des cloisons latérales opposées. Par « faces intérieures », on désigne les faces des parois d'isolement 80 qui sont tournées vers le contact mobile 36 correspondant. Ces faces intérieures correspondent ici aux faces intérieures des cloisons latérales de la pièce 82.

De préférence, ces parois 84 s'étendent sur toute la hauteur des parois 80, cette hauteur étant ici définie selon l'axe X'.

Ces parois de protection 84 servent notamment à protéger les parois d'isolement, et donc les pièces 82, contre des dommages causés par l'arc électrique.

Les parois de protection 84 sont formées d'un seul tenant avec la plaque de fond 50. Par exemple, elles appartiennent à une seule et même pièce fabriquée par moulage.

Dans cet exemple illustratif, une paroi de protection 84 s'étend le long de chaque cloison latérale d'une pièce 82. La partie 22 comporte donc ici quatre parois 84.

De préférence, les parois de protection 84 sont réalisées en un matériau gazogène. Par « matériau gazogène », on désigne un matériau qui génère un gaz de refroidissement, tel que de l'hydrogène, lorsque ce matériau est porté à une température élevée, par exemple une température supérieure ou égale à 800°C. Le gaz de refroidissement généré par le matériau gazogène favorise l'extinction de l'arc électrique. Le matériau gazogène est ici une matière synthétique, telle qu'un polyamide, par exemple un polyamide de type PA 6.6, de préférence enrichi avec des fibres de verre.

De façon avantageuse, les parois de protection 84 comportent un bord 86 replié qui recouvre et entoure les bords d'extrémité de la paroi d'isolement 80 sur toute leur hauteur. Plus précisément, chaque bord 86 est formé d'un seul tenant avec la paroi 84 correspondante, et s'étend au-delà de la face interne de la cloison latérale, en se prolongeant de façon repliée par rapport à celle-ci, de manière à recouvrir une partie de la face externe de cette paroi d'isolement 80. Dans cet exemple, comme les bords d'extrémités s'étendent parallèlement à l'axe X', alors les bords repliés 86 entourent ces derniers autour d'une direction parallèle à l'axe X'.

Les bords repliés 86 améliorent l'efficacité des parois de protection 84. En particulier, ils améliorent encore plus l'étanchéité vis-à-vis des gaz de coupure.

En formant les parois de protection 84 d'un seul tenant avec la plaque de fond 50, on améliore l'étanchéité de ces parois de protection 84 ainsi que l'étanchéité des parois d'isolement 80, notamment au niveau de la jonction entre la pièce 82 rapportée et la plaque de fond 50. De cette manière, on limite le risque que des gaz de coupure non refroidis fuient hors de la chambre de coupure et se répandent dans l'appareil 2. Au contraire, grâce à cette meilleure étanchéité, les gaz de coupure sont évacués par le biais des canaux d'évacuation 74, et sont donc mieux refroidis. Cela limite le risque de rebouclage d'un courant électrique à l'extérieur de l'élément amovible 6. La sécurité et la fiabilité de l'appareil 2 sont donc améliorées.

Cette conception est notamment avantageuse lorsque les parties de boîtier 20, 22 sont séparables l'une de l'autre. En effet, une telle séparabilité pose des contraintes d'architecture de l'élément amovible 6, qui réduisent l'étanchéité du boîtier. L'utilisation de telles parois de protection 84 autorise donc une ouverture réversible de l'élément amovible 6 sans que cette possibilité d'ouverture n'augmente le risque de fuite des gaz de coupure.

Du fait que les parois de protection 84 sont formées d'un seul tenant avec la plaque de fond 50, elles sont fabriquées en même temps que la plaque de fond 50, par exemple lors d'une même opération de moulage. La partie arrière 22 est donc plus simple à fabriquer que si ces parois de protection 84 étaient réalisées en venant fixer des pièces rapportées sur la plaque de fond 50. L'élément amovible 6 est donc plus simple à fabriquer industriellement.

Les modes de réalisation et les variantes envisagés ci-dessus peuvent être combinés entre eux pour générer de nouveaux modes de réalisation.

## Revendications

1. Elément amovible de coupure (6) d'un courant électrique, comprenant :
- un boîtier comprenant une première plaque de fond (24) et une deuxième plaque de fond (50) opposées entre elles ;
- des contacts électriques fixes (34), solidaires de la première plaque de fond (24) ;
- des contacts électriques mobiles (36) déplaçables par rapport aux contacts électriques fixes (34), ces contacts mobiles étant portés par un porte-contact mobile (54) déplaçable en translation par rapport à la deuxième plaque de fond (50) ;
le boîtier comprenant :
- des parois d'isolement (80) qui s'étendent autour des contacts électriques mobiles (36) depuis la deuxième plaque de fond (50) et selon une direction (X, X') perpendiculaire à la deuxième plaque de fond (50),
- des parois de protection (84) qui recouvrent au moins partiellement des faces intérieures des parois d'isolement (80), et le boîtier comporte une première partie (20) et une deuxième partie (22) distinctes l'une de l'autre, la première partie (20) de boîtier comprenant la première plaque de fond (24), la deuxième partie de boîtier (22) comportant la deuxième plaque de fond (50) et recevant le porte-contact mobile (54), les première et deuxième parties de boîtier (20, 22) étant séparables l'une de l'autre
**caractérisé en ce que** les parois de protection (84) étant formées d'un seul tenant avec la deuxième plaque de fond (50),
et **en ce que** les première et deuxième parties de boîtier (20, 22) sont séparables et comportent des organes de fixation (44, 62) complémentaires pour solidariser les première et deuxième parties de boîtier (20, 22) l'une avec l'autre.

2. Elément amovible de coupure (6) selon la revendication 1, **caractérisé en ce que** les parois de protection (84) comportent des bords repliés (86) qui entourent les bords d'extrémité des parois d'isolement (80) selon la direction (X, X') perpendiculaire à la deuxième plaque de fond (50).

3. Elément amovible de coupure (6) selon l'une quelconques des revendications précédentes, **caractérisé en ce que** la deuxième partie de boîtier (22) comporte une portion de guidage (64) qui autorise le déplacement en translation du porte-contact mobile (54), la portion de guidage (64) comportant à cet effet une fenêtre (68) rectiligne et ménagée dans une paroi latérale (66) de la première partie de boîtier et comportant au moins un crochet (72) porté par le porte-contact mobile (54), ce crochet (72) étant inséré dans la fenêtre (68).

4. Elément amovible de coupure (6) selon l'une quelconque des revendications précédentes, **caractérisé en ce que** les parois de protection (84) sont réalisées dans un matériau gazogène.

5. Elément amovible de coupure (6) selon l'une quelconque des revendications précédentes, **caractérisé en ce que** la deuxième plaque de fond (50) contient au moins un canal (74) d'évacuation des gaz de coupure, qui raccorde fluidiquement un orifice d'entrée, débouchant dans un volume délimité par les parois d'isolement (80) à l'intérieur du boîtier, à un orifice de sortie, débouchant à l'extérieur du boîtier.

6. Elément amovible de coupure (6) selon l'une quelconque des revendications précédentes, **caractérisé en ce que** les parois de protection (84) s'étendent sur toute la hauteur des parois d'isolement (80), selon la direction (X, X') perpendiculaire à la deuxième plaque de fond (50).

7. Elément amovible de coupure (6) selon l'une quelconque des revendications précédentes, **caractérisé en ce que** les parois d'isolement (80) sont au moins en partie formées par une pièce de soufflage (82) rapporté sur la deuxième plaque de fond (50).

8. Appareil électrique (2) de coupure d'un courant électrique, comprenant :
- une embase (4) comportant un ou plusieurs logements (8, 8', 8") ;
- un élément amovible de coupure (6) d'un courant électrique, destiné à être reçu dans un des logements (8, 8', 8") de l'embase, de sorte à ce que les contacts électriques fixes (34) de l'élément amovible de coupure (6) soient raccordés électriquement à des plages de connexion de l'appareil de coupure ;
**caractérisé en ce que** l'élément amovible de coupure (6) est selon l'une quelconque des revendications précédentes.

## Patentansprüche

1. Lösbares Element (6) zum Trennen eines elektrischen Stroms, umfassend:
- ein Gehäuse, das eine erste Grundplatte (24) und eine zweite Grundplatte (50) umfasst, die zueinander gegenüberliegen;
- feststehende elektrische Kontakte (34), die mit der ersten Grundplatte (24) verbunden sind;
- bewegliche elektrische Kontakte (36), die in Bezug auf die feststehenden elektrischen Kontakte (34) verschiebbar sind, wobei diese beweglichen Kontakte von einem beweglichen Kontaktträger (54) getragen werden, der in Längsrichtung in Bezug auf die zweite Grundplatte (50) verschiebbar ist;
wobei das Gehäuse umfasst:
- Isolierwände (80), die sich um die beweglichen elektrischen Kontakte (36) von der zweiten Grundplatte (50) und gemäß einer Richtung (X, X') senkrecht zur zweiten Grundplatte (50) erstrecken,
- Schutzwände (84), die mindestens teilweise die Innenflächen der Isolierwände (80) bedecken, und
- das Gehäuse ein erstes Teil (20) und ein zweites Teil (22) aufweist, die zueinander unterschiedlich sind, wobei das erste Gehäuseteil (20) die erste Grundplatte (24) umfasst, das zweite Gehäuseteil (22) die zweite Grundplatte (50) aufweist und den beweglichen Kontaktträger (54) aufnimmt, wobei das erste und zweite Gehäuseteil (20, 22) voneinander trennbar sind,
**dadurch gekennzeichnet, dass** die Schutzwände (84) aus einem einzigen Stück mit der zweiten Grundplatte (50) gebildet sind,
und dass das erste und zweite Gehäuseteil (20, 22) trennbar sind und komplementäre Befestigungselemente (44, 62) zum Verbinden des ersten und zweiten Gehäuseteils (20, 22) miteinander aufweisen.

2. Lösbares Trennelement (6) nach Anspruch 1, **dadurch gekennzeichnet, dass** die Schutzwände (84) umgebogene Ränder (86) aufweisen, die die Endränder der Isolierwände (80) gemäß der Richtung (X, X') senkrecht zur zweiten Grundplatte (50) umgeben.

3. Lösbare Trennanordnung (6) nach einem beliebigen der vorhergehenden Ansprüche, **dadurch gekennzeichnet, dass** das zweite Gehäuseteil (22) einen Führungsbereich (64) aufweist, der die Bewegung des beweglichen Kontaktträgers (54) in Längsrichtung zulässt, wobei der Führungsbereich (64) zu diesem Zweck ein gerades Fenster (68) aufweist, das in der Seitenwand (66) des ersten Gehäuseteils eingearbeitet ist, und mindestens einen Haken (72) aufweist, der von dem beweglichen Kontaktträger (54) getragen ist, wobei dieser Haken (72) in das Fenster (68) eingesetzt ist.

4. Lösbares Trennelement (6) nach einem beliebigen der vorhergehenden Ansprüche, **dadurch gekennzeichnet, dass** die Schutzwände (84) in einem gasenden Material hergestellt sind.

5. Lösbares Trennelement (6) nach einem beliebigen der vorhergehenden Ansprüche, **dadurch gekennzeichnet, dass** die zweite Grundplatte (50) mindestens einen Kanal (74) zum Auslassen von Trenngasen enthält, der fluidisch eine Eintrittsöffnung, die in ein von den Isolierwände (80) begrenztes Volumen im Inneren des Gehäuses mündet, mit einer Austrittsöffnung verbindet, die in Bezug auf das Gehäuse nach außen mündet.

6. Lösbares Trennelement (6) nach einem beliebigen der vorhergehenden Ansprüche, **dadurch gekennzeichnet, dass** die Schutzwände (84) sich über die gesamte Höhe der Isolierwände (80) gemäß der Richtung (X, X') senkrecht zur zweiten Grundplatte (50) erstrecken.

7. Lösbares Trennelement (6) nach einem beliebigen der vorhergehenden Ansprüche, **dadurch gekennzeichnet, dass** die Isolierwände (80) mindestens teilweise durch ein Blasteil (82) gebildet sind, das an die zweite Grundplatte (50) angesetzt ist.

8. Elektrisches Gerät (2) zum Trennen eines elektrischen Stroms, umfassend:
- einen Sockel (4) der einen oder mehrere Aufnahmeräume (8, 8', 8") aufweist;
- ein lösbares Element (6) zum Trennen eines elektrischen Stroms, das vorgesehen ist, in den Aufnahmeräumen (8, 8', 8") des Sockels aufgenommen zu werden, derart, dass die feststehenden elektrischen Kontakte (34) des lösbaren Trennelementes (6) elektrisch mit Verbindungsflächen des Trenngerätes verbunden sind;
**dadurch gekennzeichnet, dass** das lösbare Trennelement (6) nach einem beliebigen der vorhergehenden Ansprüche ausgebildet ist.

## Claims

1. Removable interrupting element (6) for an electric current, comprising:
- a housing comprising a first base plate (24) and a second base plate (50) which are opposite one another;
- fixed electrical contacts (34) which are secured to the first base plate (24);
- movable electrical contacts (36) which are displaceable relative to the fixed electrical contacts (34), the movable contacts being carried by a movable contact carrier (54) which is displaceable in translation relative to the second base plate (50);
the housing comprising:
- insulating walls (80) which extend around the movable electrical contacts (36) from the second base plate (50) and in a direction (X, X') perpendicular to the second base plate (50),
- protecting walls (84) which cover inside faces of the insulating walls (80) at least partially, and
the housing comprises a first part (20) and a second part (22) which are distinct from one another, the first housing part (20) comprising the first base plate (24), the second housing part (22) comprising the second base plate (50) and receiving the movable contact carrier (54), the first and second housing parts (20, 22) being separable from one another,
**characterised in that** the protecting walls (84) are formed in one piece with the second base plate (50),
and **in that** the first and second housing parts (20, 22) are separable and comprise complementary fixing members (44, 62) for securing the first and second housing parts (20, 22) to one another.

2. Removable interrupting element (6) according to claim 1, **characterised in that** the protecting walls (84) comprise folded edges (86) which surround the end edges of the insulating walls (80) in the direction (X, X') perpendicular to the second base plate (50).

3. Removable interrupting element (6) according to any one of the preceding claims, **characterised in that** the second housing part (22) comprises a guide portion (64) which allows the movable contact carrier (54) to move in translation, the guide portion (64) comprising for this purpose a rectilinear window (68) formed in a lateral wall (66) of the first housing part, and comprising at least one hook (72) carried by the movable contact carrier (54), the hook (72) being inserted into the window (68).

4. Removable interrupting element (6) according to any one of the preceding claims, **characterised in that** the protecting walls (84) are made of a gas-generating material.

5. Removable interrupting element (6) according to any one of the preceding claims, **characterised in that** the second base plate (50) contains at least one channel (74) for evacuation of the breaking gases which fluidically connects an inlet orifice, which opens into a volume delimited by the insulating walls (80) inside the housing, to an outlet orifice, which opens outside the housing.

6. Removable interrupting element (6) according to any one of the preceding claims, **characterised in that** the protecting walls (84) extend over the entire height of the insulating walls (80), in the direction (X, X') perpendicular to the second base plate (50).

7. Removable interrupting element (6) according to any one of the preceding claims, **characterised in that** the insulating walls (80) are formed at least in part by a blowing piece (82) which is attached to the second base plate (50).

8. Electrical apparatus (2) for interrupting an electric current, comprising:
- a base (4) having one or more receivers (8, 8', 8");
- a removable interrupting element (6) for an electric current which is to be received in one of the receivers (8, 8', 8") of the base so that the fixed electrical contacts (34) of the removable interrupting element (6) are electrically connected to connection pads of the interrupting apparatus;
**characterised in that** the removable interrupting element (6) is in accordance with any one of the preceding claims.
